# EUROPÄISCHE PATENTSCHRIFT

(11) **EP 2 962 074 B1**
(45) Veröffentlichungstag und Bekanntmachung des Hinweises auf die Patenterteilung: **27.10.2021**
(21) Anmeldenummer: 14705129.6
(22) Anmeldetag: 17.02.2014
(51) Int. Cl.: G01F 23/24, G01F 23/26

(54) **VERFAHREN UND VORRICHTUNG ZUR ÜBERWACHUNG EINES VORGEGEBENEN FÜLLSTANDS EINES MEDIUMS IN EINEM BEHÄLTER**
METHOD AND APPARATUS FOR MONITORING A PREDETERMINED FILLING LEVEL OF A MEDIUM IN A CONTAINER
PROCÉDÉ ET DISPOSITIF DE SURVEILLANCE D'UN NIVEAU PRÉDÉTERMINÉ D'UN MILIEU DANS UN RÉCIPIENT

(30) Priorität: 01.03.2013 DE 102013102055
(43) Veröffentlichungstag der Anmeldung: 06.01.2016
(73) Patentinhaber: Endress+Hauser SE+Co. KG, 79689 Maulburg (DE)
(72) Erfinder: WERNET, Armin, 79618 Rheinfelden (DE); BECHTEL, Gerd, 79585 Steinen (DE); UPPENKAMP, Kaj, 79664 Wehr (DE); FERRARO, Franco, 79739 Schwörstadt (DE)
(74) Vertreter: Andres, Angelika Maria
(86) Internationale Anmeldenummer: PCT/EP2014/052982
(87) Internationale Veröffentlichungsnummer: WO 2014/131639

(56) Entgegenhaltungen:
- EP-A1- 1 067 368
- DE-A1- 19 808 940
- DE-A1-102006 047 780
- DE-A1-102008 043 412

## Beschreibung

Die Erfindung betrifft ein Verfahren und eine Vorrichtung zur Überwachung eines vorgegebenen Füllstands eines Mediums in einem Behälter.

Aus der DE 32 12 434 C2 ist es bekannt geworden, den Füllstand eines Mediums zu überwachen, indem erkannt wird, ob über das leitfähige Medium ein elektrischer Kontakt zwischen einer Sensorelektrode und der Wandung eines leitfähigen Behälters oder einer zweiten Elektrode besteht. Da es an der Messsonde in Abhängigkeit vom zu überwachenden Medium oftmals zu Ansatzbildung kommt, kommt eine Guardelektrode zum Einsatz. Diese umgibt die Sensorelektrode koaxial und liegt auf dem gleichen elektrischen Potential wie die Sensorelektrode. Je nach Beschaffenheit des Ansatzes zeigt sich bei dieser Ausgestaltung das Problem, das Guardsignal passend zu erzeugen.

In der DE 10 2006 047 780 A1 wird eine Füllstandsmesssonde beschrieben, die über einen großen Messbereich hinweg unempfindlich ist gegenüber Ansatzbildung. Gemäß der bekannten Lösung sind eine Verstärkungseinheit und ein Begrenzungselement vorgesehen, wobei das Begrenzungselement zwischen dem Ausgang der Verstärkungseinheit und der Guardelektrode angeordnet ist. Die Guardelektrode wird über die Verstärkungseinheit und das Begrenzungselement, bei dem es sich z.B. um einen Ohm'schen Widerstand handelt, mit einem Guardsignal beaufschlagt. Analog wird die Sensorelektrode mit dem Ansteuersignal beaufschlagt. Eine Auswerteeinheit überwacht ausgehend von dem an der Sensorelektrode abgreifbaren Stromsignal und dem Ansteuersignal und/oder dem Guardsignal den Füllstand. Die Verstärkungseinheit, welche das Guardsignal erzeugt, wird durch das Begrenzungselement beschränkt. Das in seiner Amplitude beschränkte Signal wird als Anregungssignal auf die Sensorelektrode gegeben. Von der Sensorelektrode wird anschließend ein Stromsignal abgegriffen, welches in Verbindung mit dem Ansteuersignal oder dem Guardsignal zwecks Überwachung des Füllstands herangezogen wird.

Aus der DE 10 2008 043 412 A1 ist ein Füllstandschalter mit einer Speichereinheit bekannt geworden, wobei in der Speichereinheit Grenzwerte für unterschiedliche in einem Behälter befindliche Medien abgelegt sind. Bei Über- oder Unterschreiten des auf das Medium abgestimmten Grenzwertes wird ein Schaltsignal erzeugt. Insbesondere lässt sich der Grenzwert für den Messwert in Bezug auf das in dem Behälter befindliche Medium so festlegen, dass eine Ansatzbildung das zuverlässige Schalten nicht beeinflusst. Da Ansatzbildung das Messsignal verfälscht und somit eine falsche Prozessgröße vorspiegelt, ist der Grenzwert (der den Schaltpunkt bestimmt) vorzugsweise so gelegt, dass er außerhalb des Bereichs für das Messsignal liegt, welcher durch den Ansatz erreichbar ist. Die Vorrichtung kann hierbei als kapazitives oder als konduktives Füllstandsmessgerät ausgebildet sein. Da sich die Vorrichtung automatisch auf wechselnde Medien (z.B. auch im Rahmen von Reinigungsvorgängen wie CIP- und SIP Prozessen) im Behälter einstellen kann, indem der optimale Schaltpunkt aus den erfassten Mediumseigenschaften ermittelt bzw. berechnet wird, können aufwändige Abgleichsvorgänge, die üblicherweise bei einem Wechsel des Mediums notwendig sind, entfallen.

Die Füllstanddetektion mittels eines konduktiven Messverfahrens stößt an seine Grenzen, wenn das zu überwachende Medium quasi keine elektrische Leitfähigkeit (< 0,5µS/cm) oder nur eine sehr geringe Leitfähigkeit aufweist. Eine Änderung der Leitfähigkeit des Mediums im Verhältnis zur Leitfähigkeit von Luft ist dann zu gering, um noch sicher von der Messelektronik erfasst werden zu können. Bei diesen mit einem konduktiven Messverfahren schwer zu überwachenden Medien handelt es sich z.B. um destilliertes Wasser, Melasse oder Alkohole. Weiterhin problematisch sind Medien mit einer elektrischen Leitfähigkeit kleiner 1µS/cm und einer Dielektrizitätskonstanten kleiner 20. In diesen Bereich fallen insbesondere Öle und Fette.

Aus der EP01067368A1 ist ein Füllstandsmessgerät mit einer stabförmigen Sonde und einer Elektronikeinheit bekannt geworden, welches sich zur Füllstandsbestimmung nach dem kapazitiven und/oder potentiometrischen Messprinzip eignet. Zur Erfassung der Leitfähigkeit, welche als Steuergröße für die Füllstandsbestimmung einbezogen wird, ist ein zusätzlicher Leitfähigkeitsfühler vorgesehen.

In der DE19808940A1 ist eine Vorrichtung mit einer Messelektrode, einer weiteren Elektrode, welche sich zumindest teilweise unbedeckt in den Raum erstreckt und einer Messschaltung, mittels der sowohl die Kapazität zwischen beiden Elektroden als auch der Ohm'sche Widerstand gemessen werden kann. Die Impedanzmessung dient dazu, durch Feststellung der Materialeigenschaft zu einem besseren und genaueren Messergebnis bezüglich der kapazitiven Messung zu gelangen.

Der Erfindung liegt die Aufgabe zugrunde, ein Verfahren und eine Vorrichtung anzugeben, die auch bei Medien mit sehr geringer elektrischer Leitfähigkeit den Füllstand eines Mediums in einem Behälter zuverlässig überwachen.

Die Aufgabe wird bezüglich des Verfahrens dadurch gelöst, dass eine Füllstandsmesssonde in einem konduktiven Betriebsmodus als konduktive Füllstandsmesssonde und in einem kapazitiven Betriebsmodus als kapazitive Füllstandsmesssonde betrieben wird, dass der konduktive Betriebsmodus und der kapazitive Betriebsmodus abwechselnd angesteuert werden, dass anhand der Messwerte der beiden Betriebsmodi ermittelt wird, ob der vorgegebene Füllstand des Mediums in dem Behälter erreicht ist, und dass eine Meldung generiert wird, wenn der vorgegebene Füllstand überschritten und/oder unterschritten wird. Die Füllstandsmesssonde wird in einem konduktiven Betriebsmodus als konduktive Füllstandsmesssonde und im kapazitiven Betriebsmodus als kapazitive Füllstandsmesssonde betrieben, wobei die Füllstandsmesssonde sowohl zur Anwendung des konduktiven Betriebsmodus als auch zur Anwendung des kapazitiven Betriebsmodus dieselbe Sensorelektrode, Guardelektrode und Masseelektrode aufweist.

Hierbei wird das konduktive Messverfahren bei leitfähigen Medien eingesetzt, während das kapazitive Messverfahren bei nicht oder schlecht leitfähigen Medien zum Zuge kommt. Erfindungsgemäß lassen sich somit die Vorteile des konduktiven Messverfahrens und die Vorteile des kapazitiven Messverfahrens vereinen. Hierdurch ist es möglich, eine Grundstanddetektion zuverlässig über einen erweiterten Mediumsbereich bereitzustellen. Damit wird der Applikationsbereich eines Grenzstanddetektors erheblich vergrößert. Hierbei ist von Vorteil, dass die Vorteile und Nachteile des konduktiven Messverfahrens und des kapazitiven Messverfahrens in kritischen Bereichen gegenläufig sind und sich somit großteils kompensieren. Insbesondere ist es mittels des erfindungsgemäßen Verfahrens möglich, den Füllstand von Medien - unabhängig von ihren elektrischen Eigenschaften - mit einer Dielektrizitätskonstanten größer 1.5 zu detektieren.

Ein konduktives Messverfahren kommt bevorzugt zur Überwachung von Medien zum Einsatz, wenn die zu überwachenden Medien eine elektrische Leitfähigkeit > 5µS/cm aufweisen. Der Vorteil der konduktiven Messverfahren ist darin zu sehen, dass die Sensorelektroden eine direkte Anbindung an das Medium aufweisen können. Eine Isolierung der Sensorelektroden ist nicht erforderlich.

Ein Nachteil der kapazitiven Messverfahren ist darin zu sehen, dass bei Medien mit einer elektrischen Leitfähigkeit größer 100µS/cm eine Isolation zwischen der Sensorelektrode und dem Medium erforderlich ist. Die Impedanz der Isolierung erweist sich als nachteilig, sobald Ansatzbildung auftritt.

Gemäß einer vorteilhaften Ausgestaltung des erfindungsgemäßen Verfahrens ist vorgesehen, dass der Füllstandsmesssonde Information zugeordnet wird, die die Messwerte der Füllstandsmesssonde oder aus den Messwerten der Füllstandsmesssonde abgeleitete Größen in eine funktionale Beziehung zu zumindest einer medienspezifischen Eigenschaft des Mediums setzt. Durch die funktionale Beziehung werden Schaltpunkte definiert, die dem Überschreiten und/oder dem Unterschreiten des vorgegebenen Füllstands entsprechen.

Um den Messbetrieb automatisch und ohne Intervention des Bedienpersonals ablaufen zu lassen, wird bevorzugt so vorgegangen, dass zuerst im konduktiven Betriebsmodus die medienspezifische Eigenschaft ermittelt wird. Anschließend wird anhand der ermittelten Medieneigenschaft und der funktionalen Beziehung der zugehörige Schaltpunkt bestimmt. Als medienspezifische Eigenschaft werden bevorzugt die elektrische Leitfähigkeit mit L = 1/R, wobei R der Ohm'sche Widerstand des Mediums ist, oder die Dielektrizitätskonstante verwendet.

Gemäß einer vorteilhaften Ausgestaltung des erfindungsgemäßen Verfahrens werden die Messwerte der Füllstandsmesssonde zur Überwachung des vorgegebenen Füllstands bzw. des zugeordneten Schaltpunkts in Abhängigkeit von der ermittelten medienspezifischen Eigenschaft im konduktiven Betriebsmodus und/oder im kapazitiven Betriebsmodus bereitgestellt.

Insbesondere lässt sich der von der Leitfähigkeit oder der Dielektrizitäts-konstanten abhängige Mediumsbereich in drei Unterbereiche unterteilen:
- bei zu überwachenden nicht leitfähigen Medien oder Medien mit einer geringen Leitfähigkeit, insbesondere kleiner 5µS/cm, werden die Messwerte im kapazitiven Betriebsmodus ermittelt;
- bei zu überwachenden Medien mit einer hohen elektrischen Leitfähigkeit, insbesondere größer 100µS/cm, werden die Messwerte im konduktiven Betriebsmodus gewonnen;
- bei zu überwachenden Medien mit einer Leitfähigkeit in einem Zwischenbereich, insbesondere größer 5µS/cm und kleiner 100µS/cm, werden sowohl die Messwerte genommen, die im konduktiven Betriebsmodus und im kapazitiven Betriebsmodus ermittelt werden. Die Messwerte werden in Abhängigkeit von der Leitfähigkeit des zu überwachenden Mediums mit geeigneten Gewichtungsfaktoren versehen. Die Gewichtungsfaktoren, die im Bereich zwischen 0% und 100% liegen, verhalten sich gegenläufig:
- Je größer die Leitfähigkeit wird, umso größer wird der Gewichtungsfaktor für die Messwerte, die im konduktiven Betriebsmodus ermittelt werden und umso kleiner wird der Gewichtungsfaktor für die Messwerte, die im kapazitiven Betriebsmodus ermittelt werden.
- Je kleiner die Leitfähigkeit wird, umso größer wird der Gewichtungsfaktor für die Messwerte, die im kapazitiven Betriebsmodus ermittelt werden, und umso kleiner wird der Gewichtungsfaktor für die Messwerte, die im konduktiven Betriebsmodus ermittelt werden.

Gemäß einer vorteilhaften Weiterbildung des erfindungsgemäßen Verfahrens werden im Zwischenbereich die Messwerte, die im kapazitiven Betriebsmodus ermittelt werden, mit den Messwerten verglichen werden, die im konduktiven Betriebsmodus ermittelt werden. Über den Vergleich wird ein Plausibilitäts-check durchgeführt. Hierbei ist zu beachten, dass bei einem hoch leitfähigen Medium die kapazitive Messung nicht durchgeführt werden muss, da keine Zusatzinformation durch die kapazitive Messung bereitgestellt wird. Vielmehr zeigt die kapazitive Messung dann stets einen Vollausschlag. Im Gegenzug muss bei geringer elektrischer Leitfähigkeit keine konduktive Messung durchgeführt werden, da durch eine entsprechende Messung hier ebenfalls keine Zusatzinformation gewonnen werden kann.

Erfindungsgemäß wird die Vorrichtung in einem konduktiven Betriebsmodus als konduktive Füllstandsmesssonde und in einem kapazitiven Betriebsmodus als kapazitive Füllstandsmesssonde betrieben. Hierzu weist die erfindungsgemäße Vorrichtung eine Steuerung auf, die so ausgestaltet ist, dass sie den konduktiven Betriebsmodus und den kapazitiven Betriebsmodus abwechselnd ansteuert. Weiterhin ist eine Auswerte-/Ausgabeeinheit vorgesehen, die anhand der Messwerte der beiden Betriebsmodi ermittelt, ob der vorgegebene Füllstand des Mediums in dem Behälter erreicht ist, und die eine Meldung generiert, wenn der vorgegebene Füllstand überschritten und/oder unterschritten wird.

Bevorzugt ist der Füllstandsmesssonde eine Speichereinheit zugeordnet, in der Information abgelegt ist, die die Messwerte der Füllstandsmesssonde oder aus den Messwerten der Füllstandsmesssonde abgeleitete Größen in eine funktionale Beziehung zu zumindest einer medienspezifischen Eigenschaft des Mediums setzt, wobei über die funktionale Beziehung die Schaltpunkte für die Auswerte-/Ausgabeeinheit vorgegeben sind.

Bei der erfindungsgemäßen Vorrichtung weist die Füllstandsmesssonde eine Sensorelektrode und eine Guardelektrode auf. Darüber hinaus sind eine erste Elektronikeinheit und eine zweite Elektronikeinheit vorgesehen, die so ausgelegt sind, dass die erste Elektronikeinheit die Füllstandsmesssonde im konduktiven Betriebsmodus betreibt, während eine zweite Elektronikeinheit die Füllstandsmesssonde im kapazitiven Betriebsmodus betreibt. Über eine von der Steuerung aktivierte Schalteinheit werden anschließend abwechselnd der konduktive und der kapazitive Betriebsmodus aktiviert.

Auch weist die Füllstandsmesssonde eine Guardelektrode auf, wobei je nach angesteuertem Betriebsmodus die erste Elektronikeinheit oder die zweite Elektronikeinheit die Sensorelektrode mit einem Ansteuersignal und die Guardelektrode mit einem Guardsignal beaufschlagen.

Ausgehend von einem an der Sensorelektrode resultierenden abgreifbaren Signal und dem Ansteuersignal und/oder dem Guardsignal ermittelt die Auswerteeinheit das Überschreiten und/oder das Unterschreiten des vorgegebenen Füllstands. Insbesondere ist zumindest ein Messwiderstand vorgesehen, über den das Verhältnis von Guardstrom zu Sensorelektrodenstrom abgegriffen wird. Gemäß einer vorteilhaften Ausgestaltung der erfindungsgemäßen Vorrichtung ermittelt die Auswerteeinheit mindestens ein Amplitudenverhältnis aus dem Ansteuersignal und/oder dem Guardsignal und dem Stromsignal und/oder einem von dem Stromsignal abhängigen Spannungssignal. Anhand des Amplitudenverhältnisses wird nachfolgend das Überschreiten oder Unterschreiten des Füllstands des Mediums in dem Behälter ermittelt.

Die Erfindung wird anhand der nachfolgenden Figuren näher erläutert. Es zeigt:
Fig. 1 zeigt eine schematische Darstellung einer Ausgestaltung der erfindungsgemäßen Vorrichtung,
Fig. 2a: in Teilansicht einen Längsschnitt durch eine Füllstandsmesssonde,
Fig. 2b: einen Querschnitt durch die in Fig. 2a gezeigte Füllstandsmesssonde,
Fig. 3: ein Diagramm, das die relative Dielektrizitätskonstante unterschiedlicher Medien aus dem Lebensmittelbereich in Abhängigkeit von der elektrischen Leitfähigkeit zeigt,
Fig. 4: eine schematische Darstellung von Schaltkurven einer Füllstandsmesssonde,
Fig. 5: eine schematische Darstellung der unterschiedlichen Betriebsmodi,
Fig. 6: ein Flussdiagramm zur Durchführung eines Füllstandsmessverfahrens, das nicht Teil der vorliegenden Erfindung ist,
Fig. 7: ein Flussdiagramm zur Durchführung eines weiteren Füllstandsmessverfahrens, das nicht Teil der vorliegenden Erfindung ist.

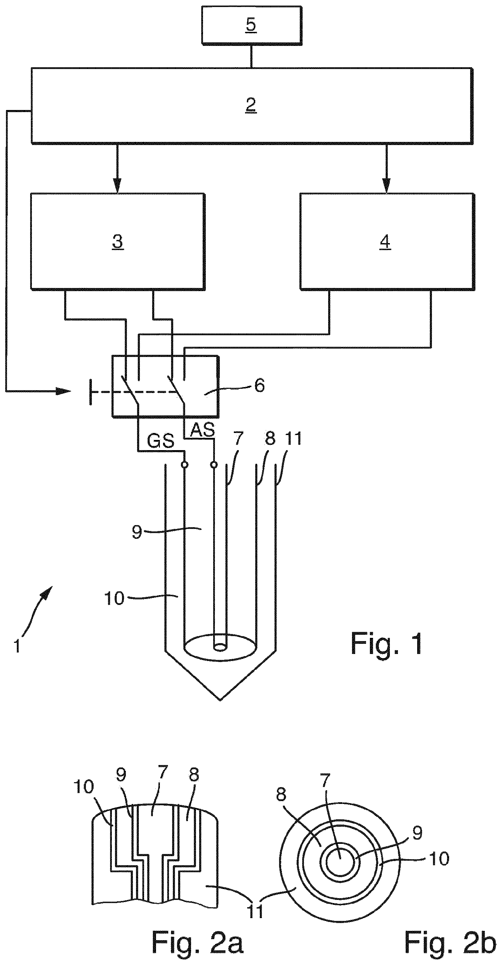

Fig. 1 zeigt eine schematische Darstellung einer bevorzugten Ausgestaltung der erfindungsgemäßen Vorrichtung zur Überwachung eines vorgegebenen Füllstands eines Mediums in einem Behälter. Die erfindungsgemäße Vorrichtung umfasst eine Füllstandsmesssonde 1, die so ausgestaltet ist, dass sie in einem konduktiven Betriebsmodus als konduktive Füllstandsmesssonde 1 und in einem kapazitiven Betriebsmodus I als kapazitive Füllstandsmesssonde 1 betrieben werden kann. Über die Steuereinheit 2, die im gezeigten Fall als integrale Komponente einer Steuer-/Auswerte-/Ausgabeeinheit 2 ausgestaltet ist, wird die Füllstandsmesssonde 1 abwechselnd in den konduktiven Betriebsmodus II und in den kapazitiven Betriebsmodus I gesteuert. Es versteht sich von selbst, dass die einzelnen Komponenten der Steuer-/Auswerte-/Anzeigeeinheit 2 auch als separate Teilkomponenten ausgestaltet sein können.

Die Füllstandsmesssonde 1 weist sowohl zur Anwendung des konduktiven Betriebsmodus als auch zur Anwendung des kapazitiven Betriebsmodus dieselbe Sensorelektrode 7, Guardelektrode 8 und Masseelektrode 11 auf. Bevorzugt ist die Füllstandsmesssonde 1 frontbündig oder zumindest näherungsweise frontbündig auf der Höhe des zu überwachenden Füllstands in die Wandung des Behälters eingebaut. Der Behälter ist in Fig.1 mit dem Bezugszeichen 11 versehen. Entsprechende Füllstandmesssonden 1 für die Grenzstanddetektion werden von der Anmelderin unter der Bezeichnung FTW33 angeboten und vertrieben. Handelt es sich um einen Behälter, der aus einem leitfähigen Material - wie in Fig. 1 dargestellt - so kann die Masseelektrode 11 von der Wandung des Behälters gebildet werden. Selbstverständlich kann die Masseelektrode 11 bei Behältern mit einer Wandung aus einem nicht leitfähigen Material auch als integrale Komponente der Füllstandsmesssonde 1 ausgebildet sein. Entsprechende Ausgestaltungen sind in Fig. 1 (Wandung als Masseelektrode 11) und in Fig. 2a, Fig. 2b (Masseelektrode 11 als integrale Komponente des Füllstandsmesssonde 1) dargestellt. Ebenso ist es möglich, als Masseelektrode eine separate Elektrode vorzusehen.

Über eine erste Elektronikeinheit 3 wird die Füllstandsmesssonde 1 im konduktiven Betriebsmodus betrieben, über eine zweite Elektronikeinheit 4 ist der kapazitive Betriebsmodus I der Füllstandsmesssonde 1 aktivierbar.

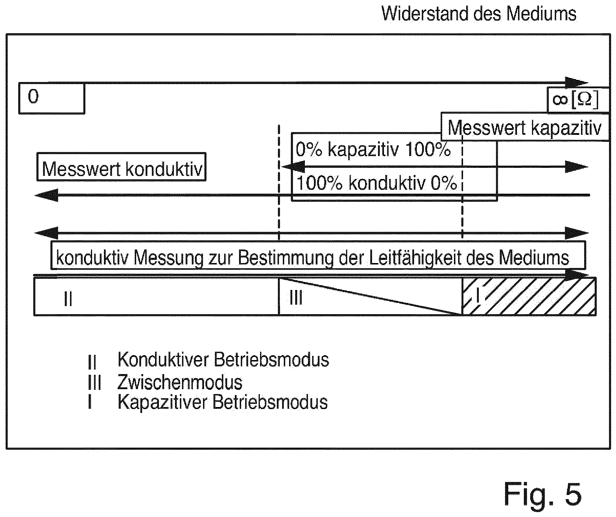

Die abwechselnde Ansteuerung des konduktiven Betriebsmodus (Bereich II in Fig. 5) und des kapazitiven Betriebsmodus (Bereich I in Fig. 5), die zumindest in der Anfangsphase zur Bestimmung der Dielektrizitäts-konstanten des Mediums oder in den Betriebsmodi für einen Plausibilitätscheck verwendet wird, erfolgt über eine Schalteinheit 6. Die Schalteinheit 6 ist entweder als analoge Schalteinheit oder als digitale Schalteinheit ausgelegt. Die Ansteuerung der Füllstandsmesssonde 1 erfolgt über das Ansteuersignal AS für die Sensorelektrode 7 und das Guardsignal GS für die Guardelektrode 8.

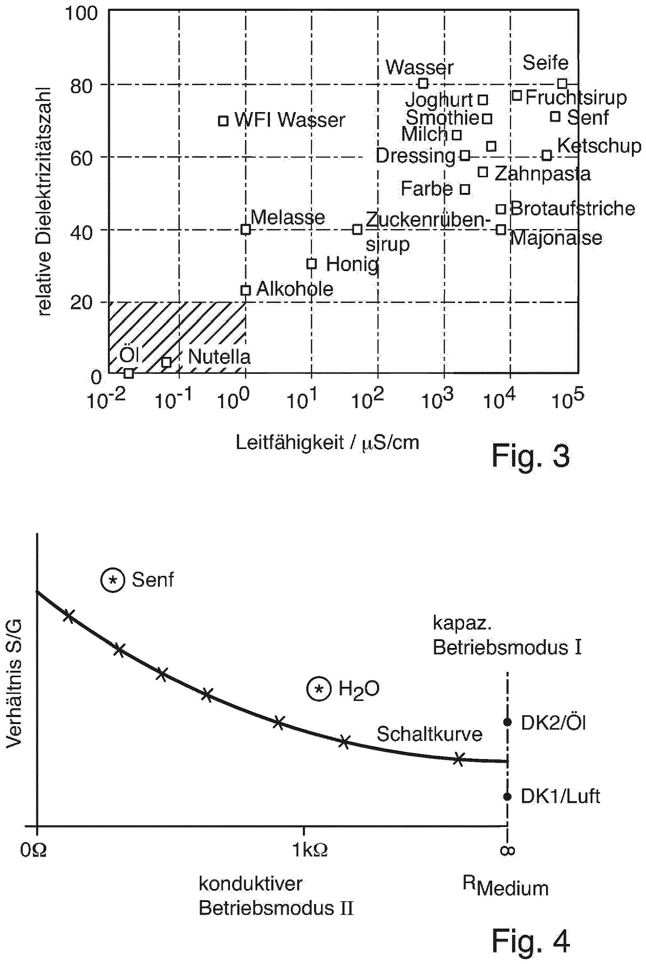

Ein Ausführungsbeispiel einer Elektronikeinheit 3 für eine konduktive Füllstandsmesssonde 1 ist beispielsweise in der bereits zuvor genannten Füllstandsmesssonde FTW33 der Anmelderin realisiert, die insbesondere für den Einsatz im Lebensmittelbereich vorgesehen ist. Geeignete Elektronikeinheiten 3 sind darüber hinaus aus der DE 10 2006 047 780 A1 und DE 10 2008 043 412 A1 bekannt geworden. Die Funktionsweise der Füllstandsmesssonde 1 im konduktiven Betriebsmodus ist in den Figuren Fig. 2 und Fig. 3 der DE 10 2006 047 780 A1 beschrieben.

Als Elektronikeinheit 4 für den kapazitiven Betriebsmodus kann beispielsweise eine Elektronik zum Einsatz kommen, wie sie in einer der kapazitiven Füllstandsmesssonden verwendet wird, die von der Anmelderin unter der Bezeichnung LIQUICAP, Nivector oder Multicap angeboten und vertrieben werden.

Anhand der Messwerte, die im kapazitiven Betriebsmodus und im konduktiven Betriebsmodus bestimmt werden, ermittelt die Steuer-/Auswerte-/Ausgabeeinheit 2, ob der vorgegebene Füllstand des Mediums in dem Behälter erreicht ist. Ist der vorgegebene Füllstand überschritten und/oder unterschritten, so wird eine entsprechende Meldung generiert und ggf. ein Schaltvorgang ausgelöst. Die Ermittlung des Schaltpunktes ist abhängig von der Leitfähigkeit bzw. der relativen Dielektrizitätskonstanten des Mediums. Zumindest eine Schaltkurve ist in der Speichereinheit 5 abgelegt. Ist die Leitfähigkeit des Mediums bekannt, so kann der zugehörige optimale Schaltpunkt anhand der abgespeicherten Schaltkurve ermittelt werden. Eine schematische Darstellung einer Schaltkurve ist in Fig. 4 zu sehen. Ein weiteres Beispiel für eine in Verbindung mit der erfindungsgemäßen Lösung anwendbare Schaltkurve ist in der bereits zitierten DE 10 2006 047 780 A1 bezeigt.

Gemäß einer vorteilhaften Ausgestaltung des erfindungsgemäßen Verfahrens bzw. der erfindungsgemäßen Vorrichtung zur Überwachung des Füllstands können drei Bereiche I, II, III unterschieden werden:
- Bei nicht leitfähigen Medien oder Medien mit einer geringen Leitfähigkeit werden die Messwerte genommen werden, die im kapazitiven Betriebsmodus (Bereich I) ermittelt werden. Bevorzugt liegt der Bereich I im Widerstandsbereich von 300kΩ bis Unendlich.
- Bei zu überwachenden Medien mit einer hohen elektrischen Leitfähigkeit werden die Messwerte genommen, die im konduktiven Betriebsmodus (Bereich II) gewonnen werden. Bevorzugt liegt der Bereich II in einem Widerstandsbereich von 0Ω bis 1MΩ.
- Bei zu überwachenden Medien mit einer Leitfähigkeit in einem Zwischenbereich (III) werden die Messwerte genommen werden, die im kapazitiven Betriebsmodus und im konduktiven Betriebsmodus ermittelt werden. In Abhängigkeit von der Leitfähigkeit werden die Messwerte mit geeigneten Gewichtungsfaktoren versehen. Diese Gewichtungsfaktoren liegen im gezeigten Fall sowohl für den kapazitiven Betriebsmodus I als auch für den konduktiven Betriebsmodus II zwischen 0% und 100% liegen, allerdings sind sie gegenläufig. Bevorzugt liegt der Bereich III in einem Widerstandsbereich von 300 kΩ bis 1MΩ.

Anhand der im kapazitiven Betriebsmodus und im konduktiven Betriebsmodus ermittelten Messwerte ist es gemäß einer bevorzugten Ausgestaltung des erfindungsgemäßen Verfahrens möglich, einen Plausibilitätscheck durchzuführen.

Im Zusammenhang mit der Erfindung wird so vorgegangen, dass unabhängig vom Medium zuerst im konduktiven Betriebsmodus die Guardspannung gemessen wird. Die Guardspannung beschreibt die Leitfähigkeit oder der Widerstand des Mediums. In Fig. 3 ist die relative Dielektrizitätskonstante von unterschiedlichen Lebensmitteln gegen die Leitfähigkeit aufgetragen. Ist der Widerstand des Mediums bekannt, so ist anhand von Fig. 5 auch bekannt, in welchem der drei Bereiche I, II, III die nachfolgenden Messungen angesiedelt sind:
- im Bereich I, in dem ausschließlich über den kapazitiven Betriebsmodus die Messwerte ermittelt werden,
- im Bereich II, in dem ausschließlich über den konduktiven Betriebsmodus die Messwerte bereitgestellt werden, oder
- im Zwischenbereich III, in dem die Messwerte für die Füllstandsüberwachung durch eine geeignete Gewichtung der im kapazitiven Betriebsmodus I und im konduktiven Betriebsmodus II ermittelten Messwerte gebildet werden.

Bei Messungen im konduktiven Betriebsmodus ist der Messwert immer abhängig von dem Verhältnis von Sensorspannung (an der Sensorelektrode 9 gemessene Spannung) zu Guardspannung (an der Guardelektrode 10 gemessene Spannung). In diesem Zusammenhang wird wiederum auf die Offenbarung der DE 10 2006 047 780 A1 verwiesen.

Bei nicht leitfähigen Medien kommt ausschließlich eine Messung im kapazitiven Betriebsmodus zur Anwendung. Dieser Messwert ist abhängig von der Dielelektrizitätskonstanten des Mediums. Dazwischen liegt ein Übergangsbereich III, in welchem die den Betriebsmodi konduktiv/kapazitiv gewonnenen Messwerte miteinander verrechnet und/oder gewichtet werden. Damit die Gewichtung stetig und ohne Sprung erfolgt, werden die im kapazitiven Betriebsmodus und im konduktiven Betriebsmodus ermittelten Messwerte anteilig von 100 bis 0% bzw. von 0% bis 100% gewichtet.

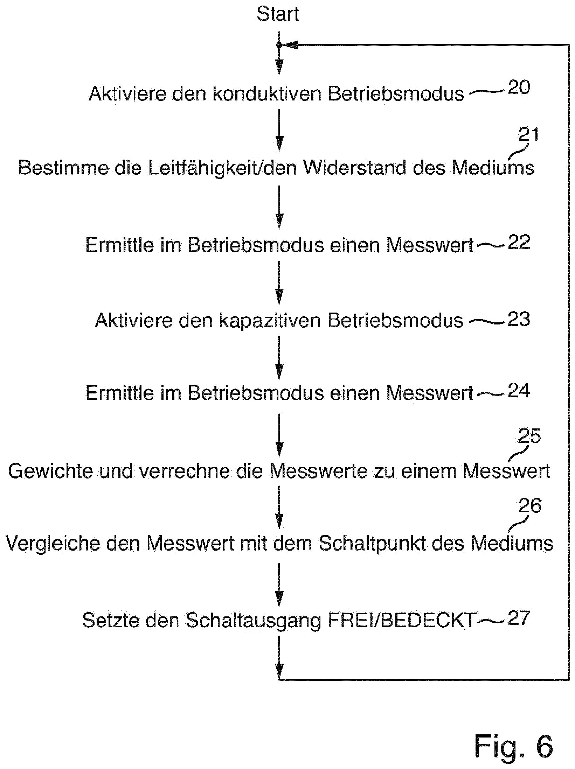

Fig. 6 zeigt ein Flussdiagramm zur Durchführung eines Füllstandsmessverfahrens, das nicht Teil der vorliegenden Erfindung ist.

Nach dem Start des Programms wird unter dem Programmpunkt 20 der konduktive Betriebsmodus II aktiviert. Anschließend wird die Leitfähigkeit bzw. der Widerstand des Mediums bestimmt (Programmpunkt 21). Unter dem Programmpunkt 22 wird anschließend im konduktiven Betriebsmodus II ein Messwert ermittelt.

Bei dem Programmpunkt 23 wird der kapazitiven Betriebsmodus I aktiviert, und es wird unter dem Programmpunkt 24 ein entsprechender Messwert ermittelt. Weiterhin wird der

Schaltpunkt anhand der gespeicherten Schaltkurve, wie sie beispielhaft in Fig. 4 dargestellt ist, ermittelt. Anhand der in Fig. 5 gespeicherten Abhängigkeit wird ermittelt, in welchem Bereich I, II, III die Überwachung des vorgegebenen Füllstands erfolgen muss. Ist der Übergangsbereich III anwendbar, so werden die geeigneten Gewichtungsfaktoren für den konduktiven Betriebsmodus II und den konduktiven Betriebsmodus I ermittelt. Bei Punkt 25 werden die ermittelten Messwerte entsprechend gewichtet, und es wird ein Messwert errechnet, der bei Programmpunkt 26 mit dem entsprechenden Schaltpunkt des Mediums verglichen wird. Als Ergebnis des Vergleichs mit der hinterlegten Schaltkurve (Programmpunkt 27) wird der Schaltausgang auf "Sensor frei" oder "Sensor bedeckt" gesetzt. Anschließend springt das Programm auf den Programmpunkt 20 zurück, und die Programmschleife 20 bis 27 wird erneut abgearbeitet.

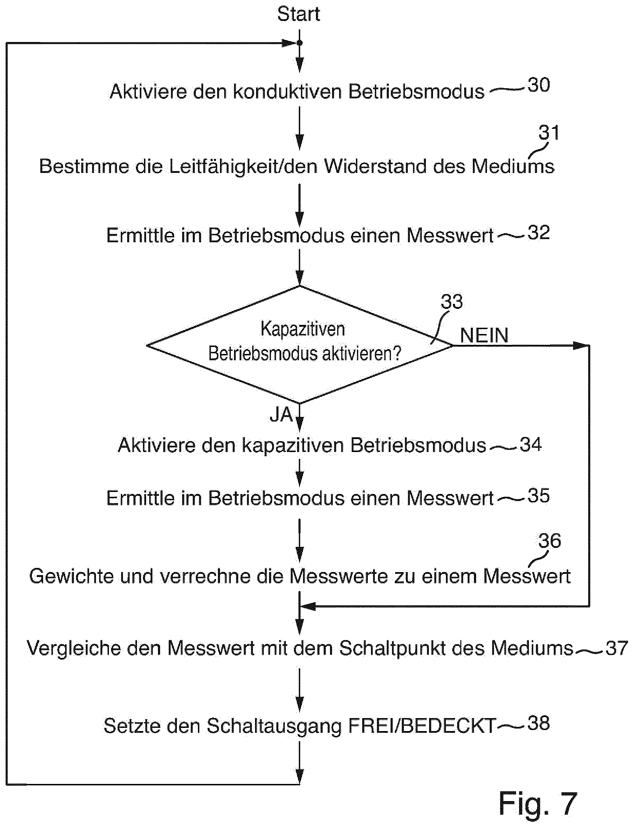

In Fig. 7 ist ein Flussdiagramm zur Durchführung eines weiteren standsmessverfahrens, das nicht Teil der vorliegenden Erfindung ist, zu sehen. Dieses Füllstandsmessverfahren deckt den Fall ab, dass die Bestimmung der Leitfähigkeit im konduktiven Betriebsmodus ergibt, dass es ausreichend ist, die Messwerte der Füllstandsmesssonde 1 nur im konduktiven Betriebsmodus zu ermitteln. Hier liefert der kapazitive Betriebsmodus keine brauchbaren Messwerte. In diesem Fall können somit die Programmpunkte 34 bis 36 ausgespart werden, wodurch die Zeit für die Bereitstellung der Messwerte zumindest verdoppelt werden kann. Sobald die Messung im konduktiven Betriebsmodus anzeigt, dass sich die Leitfähigkeit geändert hat, wird unter Punkt 33 entschieden, ob der kapazitive Betriebsmodus aktiviert werden muss.

### Bezugszeichenliste

- 1: Füllstandsmesssonde
- 2: Steuerung
- 3: erste Elektronikeinheit
- 4: zweite Elektronikeinheit
- 5: Speichereinheit
- 6: Schalteinheit
- 7: Sensorelektrode
- 8: Guardelelektrode
- 9: Isolierung
- 10: Isolierung
- 11: Masseelektrode

## Patentansprüche

1. Verfahren zur Überwachung eines vorgegebenen Füllstands eines Mediums in einem Behälter, wobei eine Füllstandsmesssonde (1) in einem konduktiven Betriebsmodus als konduktive Füllstandsmesssonde (1) und in einem kapazitiven Betriebsmodus (I) als kapazitive Füllstandsmesssonde (1) betrieben wird, wobei der konduktive Betriebsmodus und der kapazitive Betriebsmodus abwechselnd angesteuert werden, wobei anhand der Messwerte der beiden Betriebsmodi ermittelt wird, ob der vorgegebene Füllstand des Mediums in dem Behälter erreicht ist, wobei eine Meldung generiert wird, wenn der vorgegebene Füllstand überschritten und/oder unterschritten wird,
wobei die Füllstandsmesssonde (1) in einem konduktiven Betriebsmodus als konduktive Füllstandsmesssonde (1) und im kapazitiven Betriebsmodus als kapazitive Füllstandsmesssonde (1) betrieben wird, und
wobei die Füllstandsmesssonde (1) sowohl zur Anwendung des konduktiven Betriebsmodus als auch zur Anwendung des kapazitiven Betriebsmodus dieselbe Sensorelektrode (7), Guardelektrode (8) und Masseelektrode (11) aufweist.

2. Verfahren nach Anspruch 1,
wobei der Füllstandsmesssonde (1) Information zugeordnet wird, die die Messwerte der Füllstandsmesssonde (1) oder aus den Messwerten der Füllstandsmesssonde (1) abgeleitete Größen in eine funktionale Beziehung zu zumindest einer medienspezifischen Eigenschaft des Mediums setzt und wobei durch die funktionale Beziehung Schaltpunkte definiert werden, die dem Überschreiten und/oder dem Unterschreiten des vorgegebenen Füllstands entsprechen.

3. Verfahren nach Anspruch 2,
wobei die medienspezifische Eigenschaft im konduktiven Betriebsmodus (II) ermittelt wird und wobei anhand der ermittelten Medieneigenschaft und der funktionalen Beziehung der zugehörige Schaltpunkt ermittelt wird.

4. Verfahren nach Anspruch 1 oder 2,
wobei als medienspezifische Eigenschaft die elektrische Leitfähigkeit oder die Dielektrizitätskonstante verwendet wird.

5. Verfahren nach Anspruch 3 oder 4,
wobei die Messwerte der Füllstandsmesssonde (1) zur Überwachung des vorgegebenen Füllstands bzw. des zugeordneten Schaltpunkts in Abhängigkeit von der ermittelten medienspezifischen Eigenschaft in dem konduktiven Betriebsmodus und/oder in dem kapazitiven Betriebsmodus bereitgestellt werden.

6. Verfahren nach Anspruch 4 oder 5, wobei bei zu überwachenden nicht leitfähigen Medien oder Medien mit einer geringen Leitfähigkeit die Messwerte genommen werden, die im kapazitiven Betriebsmodus ermittelt werden,
wobei bei zu überwachenden Medien mit einer elektrischen Leitfähigkeit die Messwerte genommen werden, die im konduktiven Betriebsmodus gewonnen werden, und wobei bei zu überwachenden Medien mit einer Leitfähigkeit in einem Übergangsbereich (III) die Messwerte genommen werden, die im kapazitiven Betriebsmodus und im konduktiven Betriebsmodus ermittelt werden, wobei die Messwerte in Abhängigkeit von der Leitfähigkeit des Mediums mit entsprechenden Gewichtungsfaktoren versehen werden.

7. Verfahren nach Anspruch 6,
wobei im Übergangsbereich (III) die Messwerte, die im kapazitiven Betriebsmodus ermittelt werden, mit den Messwerten verglichen werden, die im konduktiven Betriebsmodus ermittelt werden, und wobei über den Vergleich ein Plausibilitätscheck durchgeführt wird.

8. Vorrichtung zur Überwachung eines vorgegebenen Füllstands eines Mediums in einem Behälter mit einer Füllstandsmesssonde (1), die so ausgestaltet ist, dass sie in einem konduktiven Betriebsmodus als konduktive Füllstandsmesssonde (1) und in einem kapazitiven Betriebsmodus als kapazitive Füllstandsmesssonde (1) betrieben wird, mit einer Steuer-/ Auswerte-/Ausgabeeinheit (2), die so ausgestaltet ist, dass sie den konduktiven Betriebsmodus und den kapazitiven Betriebsmodus abwechselnd ansteuert, und mit einer Steuer-/Auswerte-/Ausgabeeinheit (2), die anhand der Messwerte der beiden Betriebsmodi ermittelt, ob der vorgegebene Füllstand des Mediums in dem Behälter erreicht ist, und die eine Meldung generiert, wenn der vorgegebene Füllstand überschritten und/oder unterschritten wird,
wobei die Füllstandsmesssonde (1) derart ausgestaltet ist, dass die Füllstandsmesssonde (1) in einem konduktiven Betriebsmodus als konduktive Füllstandsmesssonde (1) und im kapazitiven Betriebsmodus als kapazitive Füllstandsmesssonde (1) betrieben wird, und
wobei die Füllstandsmesssonde (1) sowohl zur Anwendung des konduktiven Betriebsmodus als auch zur Anwendung des kapazitiven Betriebsmodus dieselbe Sensorelektrode (7), Guardelektrode (8) und Masseelektrode (11) aufweist.

9. Vorrichtung nach Anspruch 8,
wobei der Füllstandsmesssonde (1) eine Speichereinheit (5) zugeordnet ist, in der Information abgelegt ist, die die Messwerte der Füllstandsmesssonde oder aus den Messwerten der Füllstandsmesssonde (1) abgeleitete Größen in eine funktionale Beziehung zu zumindest einer medienspezifischen Eigenschaft des Mediums setzt, wobei über die funktionale Beziehung die Schaltpunkte für die Steuer-/Auswerte-/Ausgabeeinheit (2) vorgegeben sind.

10. Vorrichtung nach Anspruch 8 oder 9,
wobei die Füllstandsmesssonde (1) eine Sensorelektrode (7) und eine Guardelektrode (8) aufweist,
wobei eine erste Elektronikeinheit (3) vorgesehen ist, die so ausgelegt ist, das sie die Füllstandsmesssonde (1) im konduktiven Betriebsmodus betreibt,
wobei eine zweite Elektronikeinheit (4) vorhanden ist, die so ausgelegt ist, dass sie die Füllstandsmesssonde (1) im kapazitiven Betriebsmodus betreibt, und
wobei eine Schalteinheit (6) vorhanden ist, über die die Steuer-/ Auswerte-/Ausgabeeinheit (2) abwechselnd den konduktiven Betriebsmodus und den kapazitiven Betriebsmodus der Füllstandsmesssonde (1) aktiviert.

11. Vorrichtung nach einem oder mehreren der Ansprüche 8-10,
wobei je nach angesteuertem Betriebsmodus (I, II) die erste Elektronikeinheit (3) oder die zweite Elektronikeinheit (4) die Sensorelektrode (7) mit einem Ansteuersignal und die Guardelektrode (8) mit einem Guardsignal beaufschlagen.

12. Vorrichtung nach Anspruch 11,
wobei die Steuer- Auswerte-/Ausgabeeinheit (2) ausgehend von einem an der Sensorelektrode (7) resultierenden abgreifbaren Signal und dem Ansteuersignal und/oder dem Guardsignal das Überschreiten und/oder das Unterschreiten des vorgegebenen Füllstands ermittelt.

13. Vorrichtung nach Anspruch 12,
wobei zumindest ein Messwiderstand vorhanden ist, über den das Verhältnis von Guardstrom zu Sensorelektrodenstrom abgegriffen wird.

14. Vorrichtung nach Anspruch 12 oder 13,
wobei die Steuer-/Auswerte-/Ausgabeeinheit (2) mindestens ein Amplitudenverhältnis aus dem Guardsignal und/oder dem Ansteuersignal und dem Stromsignal und/oder einem von dem Stromsignal abhängigen Spannungssignal ermittelt und anhand des Amplitudenverhältnisses das Überschreiten oder Unterschreiten des Füllstands des Mediums in dem Behälter ermittelt.

## Claims

1. Method for monitoring a predefined level of a medium in a vessel, wherein a level measuring probe (1) is operated as a conductive level measuring probe (1) in a conductive operating mode and as a capacitive level measuring probe (1) in a capacitive operating mode, wherein the conductive operating mode and the capacitive operating mode are activated alternately, wherein the measured values of the two operating modes are used to determine whether the predefined level of the medium in the vessel is reached, wherein a message is generated if the predefined level is exceeded and/or undershot,
wherein the level measuring probe (1) is operated as a conductive level measuring probe (1) in a conductive operating mode and as a capacitive level measuring probe (1) in the capacitive operating mode, and
wherein the level measuring probe (1) has the same sensor electrode (7), guard electrode (8) and ground electrode (11) both for the use of the conductive operating mode and for the use of the capacitive operating mode.

2. Method as claimed in Claim 1,
wherein information is assigned to the level measuring probe (1) which functionally relates the measured values of the level measuring probe (1) or variables derived from the measured values of the level measuring probe (1) to at least one medium-specific property, and
wherein, on the basis of the functional relationship, switch points are defined that correspond to the overshooting and/or undershooting of the predefined level.

3. Method as claimed in Claim 2,
wherein the medium-specific property is determined in the conductive operating mode (II) and wherein the associated switch point is determined on the basis of the determined medium property and the functional relationship.

4. Method as claimed in Claim 1 or 2,
wherein the electrical conductivity or the dielectric constant is used as the medium-specific property.

5. Method as claimed in Claim 3 or 4,
wherein the measured values of the level measuring probe (1) for monitoring the predefined level or the associated switch point are provided depending on the medium-specific property determined in the conductive operating mode and/or the capacitive operating mode.

6. Method as claimed in Claim 4 or 5,
wherein, if non-conductive media or media with a low conductivity are to be monitored, the measured values that are determined in the capacitive operating mode are taken, wherein, if media with an electrical conductivity are to be monitored, the measured values that are obtained in the conductive operating mode are taken and wherein in the case of media to be monitored with a conductivity in a transition zone (III), the measured values that are determined in the capacitive operating mode and in the conductive operating mode are taken, wherein the measured values are weighted with suitable weighting factors depending on the conductivity of the medium.

7. Method as claimed in Claim 6,
wherein, in the transition zone (III), the measured values determined in the capacitive operating mode are compared with the measured values determined in the conductive operating mode, and wherein a plausibility check is performed on the basis of the comparison.

8. Apparatus designed to monitor a predefined level of a medium in a vessel with a level measuring probe (1), which is designed in such a way that it operates as a conductive level measuring probe (1) in a conductive operating mode and as a capacitive level measuring probe (1) in a capacitive operating mode, with a control/evaluation/output unit (2) which is designed in such a way that it alternately activates the conductive operating mode and the capacitive operating mode, and with a control/evaluation/output unit (2) that uses the measured values of the two operating modes to determine if the predefined level of the medium in the vessel has been reached, and which generates a message if the predefined level is exceeded and/or undershot,
wherein the level measuring probe (1) is designed in such a way that the level measuring probe (1) operates as a conductive level measuring probe (1) in a conductive operating mode and as a capacitive level measuring probe (1) in a capacitive operating mode, and wherein the level measuring probe (1) uses the same sensor electrode (7), the same guard electrode (8) and the same ground electrode (11) both for the conductive operating mode and for the capacitive operating mode.

9. Apparatus as claimed in Claim 8,
wherein a memory unit (5) is assigned to the level measuring probe (1), wherein information is stored in said memory unit, wherein said information functionally relates the measured values of the level measuring probe, or variables derived from the measured values of the level measuring probe (1), to at least one medium-specific property of the medium, wherein the switch points for the control/evaluation/output unit (2) are predefined by the functional relationship.

10. Apparatus as claimed in Claim 8 or 9,
wherein the level measuring probe (1) comprises a sensor electrode (7) and a guard electrode (8),
wherein a first electronic unit (3) is provided that is designed in such a way that it operates the level measuring probe (1) in the conductive operating mode,
wherein a second electronic unit (4) is provided that is designed in such a way that it operates the level measuring probe (1) in the capacitive operating mode, and wherein a switching unit (6) is provided by means of which the control/evaluation/output unit (2) alternatively activates the conductive operating mode and the capacitive operating mode of the level measuring probe (1).

11. Apparatus as claimed in one or more of the previous Claims 8 to 10,
wherein, depending on the activated operating mode (I, II), the first electronic unit (3) or the second electronic unit (4) apply an activation signal to the sensor electrode (7) and a guard signal to the guard electrode (8).

12. Apparatus as claimed in Claim 11,
wherein the control/evaluation/output unit (2) determines, on the basis of a resulting signal that can be measured at the sensor electrode (7) and on the basis of the activation signal and/or the guard signal, the overshooting and/or undershooting of the predefined level.

13. Apparatus as claimed in Claim 12,
wherein at least one measuring resistor is provided by means of which the ratio of the guard current to the sensor electrode current is measured.

14. Apparatus as claimed in Claim 12 or 13,
wherein the control/evaluation/output unit (2) determines at least an amplitude ratio from the guard signal and/or the activation signal and the current signal and/or a voltage signal depending on the current signal, and determines, on the basis of the amplitude ratio, the overshooting or undershooting of the level of the medium in the vessel.

## Revendications

1. Procédé destiné à la surveillance d'un niveau prédéfini d'un produit dans un réservoir, une sonde de mesure de niveau (1) étant exploitée dans un mode de fonctionnement conductif en tant que sonde de mesure de niveau conductive (1) et dans un mode de fonctionnement capacitif (I) en tant que sonde de mesure de niveau capacitive (1), le mode de fonctionnement conductif et le mode de fonctionnement capacitif étant commandés en alternance, les valeurs mesurées des deux modes de fonctionnement étant utilisées pour déterminer si le niveau prédéfini du produit dans le réservoir a été atteint, un message étant généré si le niveau prédéfini est dépassé par excès et/ou par défaut,
la sonde de mesure de niveau (1) étant exploitée comme une sonde de mesure de niveau conductive (1) dans un mode de fonctionnement conductif et comme une sonde de mesure de niveau capacitive (1) dans le mode de fonctionnement capacitif, et
la sonde de mesure de niveau (1) comportant la même électrode de capteur (7), électrode de garde (8) et électrode de masse (11) à la fois pour l'application du mode de fonctionnement conductif et pour l'application du mode de fonctionnement capacitif.

2. Procédé selon la revendication 1,
pour lequel on associe à la sonde de mesure de niveau (1) des informations qui mettent les valeurs mesurées de la sonde de mesure de niveau (1) ou des grandeurs dérivées des valeurs mesurées de la sonde de mesure de niveau (1) dans une relation fonctionnelle avec au moins une propriété spécifique du produit, et
pour lequel la relation fonctionnelle définit des points de commutation qui correspondent à un dépassement par excès et/ou par défaut du niveau prédéfini.

3. Procédé selon la revendication 2,
pour lequel la propriété spécifique au produit est déterminée en mode de fonctionnement conductif (II) et pour lequel le point de commutation associé est déterminé sur la base de la propriété du produit déterminée et de la relation fonctionnelle.

4. Procédé selon la revendication 1 ou 2,
pour lequel la conductivité électrique ou la constante diélectrique est utilisée comme propriété spécifique au produit.

5. Procédé selon la revendication 3 ou 4,
pour lequel les valeurs mesurées de la sonde de mesure de niveau (1) pour la surveillance du niveau prédéfini ou du point de commutation associé sont fournies dans le mode de fonctionnement conductif et/ou dans le mode de fonctionnement capacitif en fonction de la propriété spécifique au produit déterminée.

6. Procédé selon la revendication 4 ou 5,
pour lequel, dans le cas de produits non conducteurs ou de produits à faible conductivité à surveiller, on prend les valeurs mesurées qui sont déterminées dans le mode de fonctionnement capacitif,
pour lequel, dans le cas de produits à conductivité électrique à surveiller, on prend les valeurs mesurées qui sont obtenues dans le mode de fonctionnement conductif et, dans le cas de produits à surveiller ayant une conductivité dans une plage de transition (III), on prend les valeurs mesurées qui sont déterminées dans le mode de fonctionnement capacitif et dans le mode de fonctionnement conductif, les valeurs mesurées étant pourvues de facteurs de pondération correspondants en fonction de la conductivité du produit.

7. Procédé selon la revendication 6,
pour lequel, dans la zone de transition (III), les valeurs mesurées déterminées dans le mode de fonctionnement capacitif sont comparées aux valeurs mesurées déterminées dans le mode de fonctionnement conductif, un contrôle de plausibilité étant effectué par le biais de la comparaison.

8. Dispositif destiné à la surveillance d'un niveau prédéfini d'un produit dans un réservoir avec une sonde de mesure de niveau (1), laquelle sonde est conçue de telle sorte qu'elle fonctionne dans un mode de fonctionnement conductif comme sonde de mesure de niveau conductive (1) et dans un mode de fonctionnement capacitif comme sonde de mesure de niveau capacitive (1), avec une unité de commande / d'exploitation / de sortie (2), laquelle unité est conçue de telle sorte qu'elle commande alternativement le mode de fonctionnement conductif et le mode de fonctionnement capacitif, et avec une unité de commande / d'exploitation / de sortie (2), laquelle unité détermine, à partir des valeurs mesurées des deux modes de fonctionnement, si le niveau prédéfini du produit dans le réservoir a été atteint, et laquelle unité génère un message si le niveau prédéfini est dépassé par excès et/ou par défaut,
la sonde de mesure de niveau (1) étant conçue de telle sorte que la sonde de mesure de niveau (1) fonctionne dans un mode de fonctionnement conductif en tant que sonde de mesure de niveau conductive (1) et dans un mode de fonctionnement capacitif en tant que sonde de mesure de niveau capacitive (1), et la sonde de mesure de niveau (1) utilisant la même électrode de capteur (7), la même électrode de garde (8) et la même électrode de masse (11) à la fois pour l'application du mode de fonctionnement conductif et pour l'application du mode de fonctionnement capacitif.

9. Dispositif selon la revendication 8,
pour lequel une unité de mémoire (5) est associée à la sonde de mesure de niveau (1), unité dans laquelle sont stockées des informations qui établissent une relation fonctionnelle entre les valeurs mesurées de la sonde de mesure de niveau ou des variables dérivées des valeurs mesurées de la sonde de mesure de niveau (1) et au moins une propriété spécifique au produit, les points de commutation pour l'unité de commande / d'exploitation / de sortie (2) étant prédéfinis par la relation fonctionnelle.

10. Dispositif selon la revendication 8 ou 9,
pour lequel la sonde de mesure de niveau (1) comprend une électrode de capteur (7) et une électrode de garde (8),
une première unité électronique (3) étant prévue, laquelle unité est conçue pour faire fonctionner la sonde de mesure de niveau (1) en mode de fonctionnement conductif, une deuxième unité électronique (4) étant prévue, laquelle unité est conçue de telle sorte à exploiter la sonde de mesure de niveau (1) dans le mode de fonctionnement capacitif, et une unité de commutation (6) étant présente, par l'intermédiaire de laquelle l'unité de commande / d'exploitation / de sortie (2) active alternativement le mode de fonctionnement conductif et le mode de fonctionnement capacitif de la sonde de mesure de niveau (1).

11. Dispositif selon l'une ou plusieurs des revendications 8 à 10,
pour lequel, en fonction du mode de fonctionnement commandé (I, II), la première unité électronique (3) ou la deuxième unité électronique (4) applique un signal de commande à l'électrode de capteur (7) et un signal de garde à l'électrode de garde (8).

12. Dispositif selon la revendication 11,
pour lequel l'unité de commande / d'exploitation / de sortie (2) détermine, sur la base d'un signal pouvant être prélevé sur l'électrode de capteur (7) et du signal de commande et/ou du signal de garde, le dépassement par excès et/ou par défaut du niveau prédéfini.

13. Dispositif selon la revendication 12,
pour lequel il existe au moins une résistance de mesure par l'intermédiaire de laquelle le rapport entre le courant de garde et le courant de l'électrode du capteur est prélevé.

14. Dispositif selon la revendication 12 ou 13,
pour lequel l'unité de commande / d'exploitation / de sortie (2) détermine au moins un rapport d'amplitude à partir du signal de garde et/ou du signal de commande et du signal de courant et/ou d'un signal de tension dépendant du signal de courant, et détermine le dépassement par excès ou par défaut du niveau de produit dans le réservoir sur la base du rapport d'amplitude.
